# EUROPEAN PATENT SPECIFICATION

(11) **EP 3 620 643 B1**
(45) Date of publication and mention of the grant of the patent: **27.10.2021**
(21) Application number: 19196050.9
(22) Date of filing: 06.09.2019
(51) Int. Cl.: F02K 1/70, F02K 1/11, F02K 1/76

(54) **DEPLOYABLE FAIRING FOR DOOR REVERSERS SYSTEMS AND METHODS**
ENTFALTBARE VERKLEIDUNG FÜR TÜRUMKEHRER, SYSTEME UND VERFAHREN
CARÉNAGE DÉPLOYABLE POUR SYSTÈMES INVERSEURS DE PORTE ET PROCÉDÉS

(30) Priority: 06.09.2018 US 201862728003 P; 02.10.2018 US 201862740328 P; 04.09.2019 US 201916560716
(43) Date of publication of application: 11.03.2020
(73) Proprietor: Rohr, Inc., Chula Vista, CA 91910-2098 (US)
(72) Inventor: GORMLEY, Timothy, Bonita, CA California 91902 (US)
(74) Representative: Dehns

(56) References cited:
- EP-A1- 0 574 730
- EP-A2- 2 060 765

## Description

### FIELD

The present disclosure relates generally to aircraft thrust reversers used with gas turbine engines and, more particularly, to pivot door thrust reversers.

### BACKGROUND

Turbofan gas turbine engines are known to include a fan section that produces a bypass airflow for providing the majority of engine propulsion and a core engine section through which a core airflow is compressed, mixed with fuel, combusted and expanded through a turbine to drive the fan section. In a mixed flow turbofan engine, the cool bypass airflow is ducted between a surrounding nacelle and an outer casing of the core engine section and mixed with a hot exhaust stream from the core engine section prior to discharge from the engine nozzle in a combined or mixed exhaust stream. The surrounding nacelle may include a thrust reverser capable of redirecting the mixed exhaust stream from a rearward direction to, at least partially, a forward direction thus producing a rearward thrust that may serve to decelerate forward motion of an aircraft and thereby assist braking the aircraft upon landing. Pivot door thrust reversers may be used with turbofan gas turbine engines for aircraft, including for corporate or business jets. Pre-exit pivot door thrust reversers may generally be characterized as including thrust reverser doors having trailing edges positioned forward of the exit plane of an exhaust duct, while post-exit pivot door thrust reversers may generally be characterized as including thrust reverser doors having trailing edges that form at least a portion of the exit plane of an exhaust duct.

EP 2 060 765 A2 discloses a prior art actuation arrangement as set forth in the preamble of claim 1.

### SUMMARY

From a first aspect, there is provided an actuation arrangement for a thrust reverser as recited in claim 1.

There is also provided a thrust reverser as recited in claim 5.

There is also provided a method as recited in claim 10.

Features of embodiments of the invention are set forth in the dependent claims. The features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 provides a schematic view of a gas turbine engine, in accordance with various embodiments;
FIG. 2A provides an isometric view of a thrust reverser in a stowed position, in accordance with various embodiments;
FIG. 2B provides an isometric view of the thrust reverser of FIG. 2A, with the upper reverser door and an upper portion of the deployable fairing removed for clarity purposes, in accordance with various embodiments;
FIG. 2C provides an isometric view of the thrust reverser of FIG. 2B, with the lower reverser door rotated towards a partially open position and the deployable fairing rotated towards a partially deployed position, in accordance with various embodiments;
FIG. 2D provides an isometric view of the thrust reverser of FIG. 2B, with the lower reverser door rotated to an open position and the deployable fairing rotated to a deployed position, in accordance with various embodiments;
FIG. 3A and FIG. 3B provide isometric views of a thrust reverser, not part of the claimed invention, comprising an actuation arrangement for a deployable fairing that operates independent of the rotational position of the reverser doors, with the deployable fairing in a stowed position and a deployed position, respectively; and
FIG. 4 provides a flow chart illustrating a method of deploying a thrust reverser, in accordance with various embodiments.

### DETAILED DESCRIPTION

The following detailed description of various embodiments herein makes reference to the accompanying drawings, which show various embodiments by way of illustration.

The detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Modern business jets typically use door type thrust reverses which typically provide high efficiency by reversing the core airflow as well as the bypass airflow. To achieve said high efficiency, it is desirable to deploy the doors such that the trailing edges are in close proximity (or overlap) when fully deployed. To achieve this, it is typically desirable to locate the door hinges relatively close together and relatively far aft in the thrust reverser nozzle. Since space is typically limited and the doors and hinges need to be located close together, it may be desirable to have the doors occupy the same space at various points during the deploy/stow cycle.

In various embodiments, a thrust reverser, as provided herein, includes a deployable fairing configured to move away from a central axis of the thrust reverser to provide clearance for one of more thrust reverser pivot doors to rotate into a deployed position. The deployable fairing is actuated via an actuation arrangement dependent on the rotational position of one or more of the reverser doors.

A deployable fairing, as provided herein, may comprise a robust design that is not limited by space constraint at the trailing edge. A deployable fairing, as provided herein, may be used with side or center actuation. A deployable fairing, as provided herein, may be used independently of the (hinge line location) type of reverser. A deployable fairing, as provided herein, may provide additional space for the thrust reverser structure, hinges, and pivot doors. A deployable fairing, as provided herein, may provide clean trim lines and unwanted loft protrusions. A deployable fairing, as provided herein, may eliminate large gaps at the trailing edge of the thrust reverser.

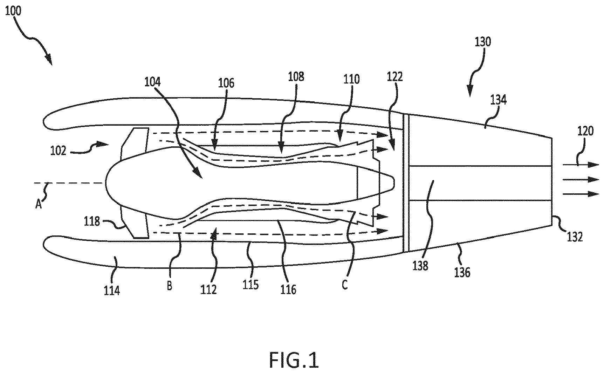

Referring now to the drawings, FIG. 1 schematically illustrates a gas turbine engine 100 of a mixed flow turbofan variety. The gas turbine engine 100 generally includes a fan section 102 and a core engine section 104, which includes a compressor section 106, a combustor section 108 and a turbine section 110. The fan section 102 drives air along a bypass flow path B in a bypass duct 112 defined within a radially inner surface 115 of a nacelle 114 and an outer casing 116 of the core engine section 104, while the compressor section 106 drives air along a core flow path C of the core engine section 104 for compression and communication into the combustor section 108 and then expansion through the turbine section 110.

The core engine section 104 may generally include a low speed spool and a high speed spool mounted for rotation about a central longitudinal axis A. The low speed spool generally includes an inner shaft that interconnects a fan 118 within the fan section 102, a low pressure compressor within the compressor section 106 and a low pressure turbine within the turbine section 110. The inner shaft may be connected to the fan 118 through a speed change mechanism or gear box to drive the fan 118 at a lower rotational speed than the rotational speed of the low speed spool. The high speed spool generally includes an outer shaft that interconnects a high pressure compressor within the compressor section 106 and a high pressure turbine within the turbine section 110. A combustor is arranged in the combustor section 108 between the high pressure compressor and the high pressure turbine. The air passing through the bypass flow path B mixes with the combustion gases exiting the core flow path C in a mixing section 122 positioned downstream of the core engine section 104 prior to discharge as a mixed exhaust stream 120, which provides the thrust achieved by the gas turbine engine 100.

A thrust reverser 130 is mounted to the aft end of the gas turbine engine 100. The thrust reverser 130 includes a generally annular exhaust duct 132, which defines an outer boundary for discharging the mixed exhaust stream 120 when the thrust reverser 130 assumes a stowed position (also referred to as a closed position or a retracted position), as illustrated in FIG. 1. The thrust reverser 130 further includes an upper reverser door 134, a lower reverser door 136 and a pair of opposing fairings 138, which may house actuator componentry and connecting members used to open and close the upper reverser door 134 and the lower reverser door 136. As discussed below, thrust reversal is affected by opening the upper reverser door 134 and the lower reverser door 136 to direct all or a portion of the mixed exhaust stream 120 in a direction having an upstream component relative to the central longitudinal axis A of the gas turbine engine 100. The momentum of the upstream component of the mixed exhaust stream 120 exiting the thrust reverser 130 while in an open or deployed position provides the reverse thrust used to decelerate an aircraft upon landing or during a rejected takeoff.

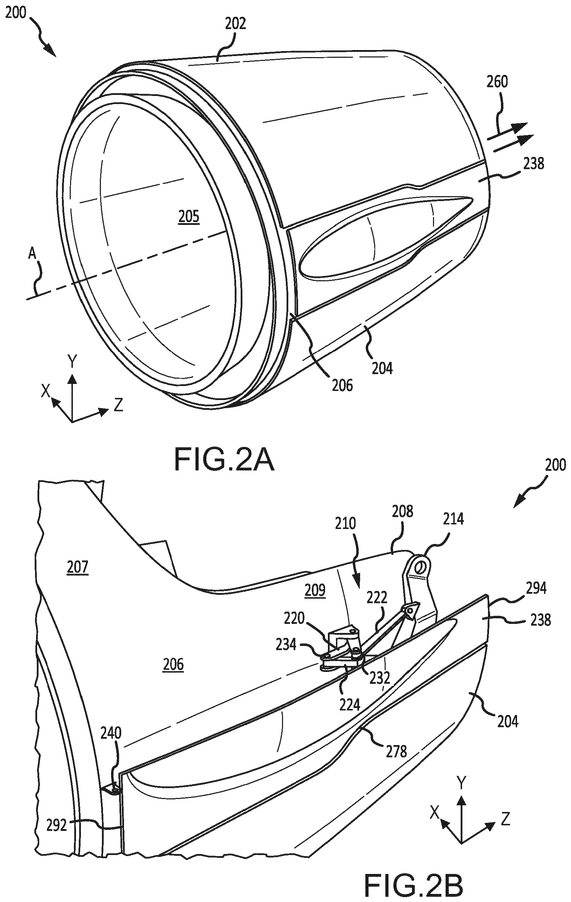

Referring now to FIG. 2A and FIG. 2B, perspective views of a thrust reverser 200 in a stowed position are illustrated, in accordance with various embodiments. The thrust reverser 200 includes an upper reverser door 202, a lower reverser door 204, and a frame 206. In various embodiments, the frame 206 includes an annular structure 207 with a pair of opposing side beams 208 extending from the annular structure 207. The pair of opposing side beams 208 may include a port side beam 209 and a starboard side beam. The pair of opposing side beams 208 may provide a structural support for mounting related components and operating the thrust reverser 200 between deployed and retracted positions. Upper reverser door 202 is moveable relative to frame 206. Lower reverser door 204 is moveable relative to frame 206.

With particular focus on FIG. 2B, lower reverser door 204 may be rotatably coupled to frame 206 via a hinge member 214. Upper reverser door 202 is omitted in various drawings for clarity purposes. However, upper reverser door 202 may be similarly rotatably coupled to frame 206 via a hinge member.

A deployable fairing 238 is coupled to frame 206. A section view of deployable fairing 238, with the upper half of deployable fairing 238 removed, is provided in various drawings (e.g., FIG. 2B) for clarity purposes in order to clearly illustrate an actuation arrangement 210 for deploying or actuating the deployable fairing. In the stowed position, deployable fairing 238 may provide an aerodynamic surface extending between, and generally flush with upper reverser door 202 and lower reverser door 204. A peripheral edge 278 of deployable fairing 238 facing lower reverser door 204 may be oriented generally parallel the fore-aft direction (Z-direction) along the entire length (i.e., from forward edge 292 to aft edge 294) of deployable fairing 238, thereby maximizing the aerodynamic efficiency of thrust reverser 200 and reducing overall drag. In the deployed position, deployable fairing 238 may rotate outwards (i.e., away from central axis A) to provide additional space for upper reverser door 202 and lower reverser door 204 to deploy, thereby preventing upper reverser door 202 and/or lower reverser door 204 from physically contacting or clashing with deployable fairing 238.

In various embodiments, an actuation arrangement 210 is mounted to the port side beam 209. In various embodiments, a second actuation arrangement is mounted to the starboard side beam. The second actuation arrangement may be similar to actuation arrangement 210 and the two actuation arrangements may be generally symmetric about central axis A. Stated differently, the starboard side actuation arrangement and side beam configuration may be symmetrical with the port side actuation arrangement and side beam configuration described herein. In this regard, although described herein with respect to the port side, it should be understood that the starboard side may comprise a similar arrangement as the port side.

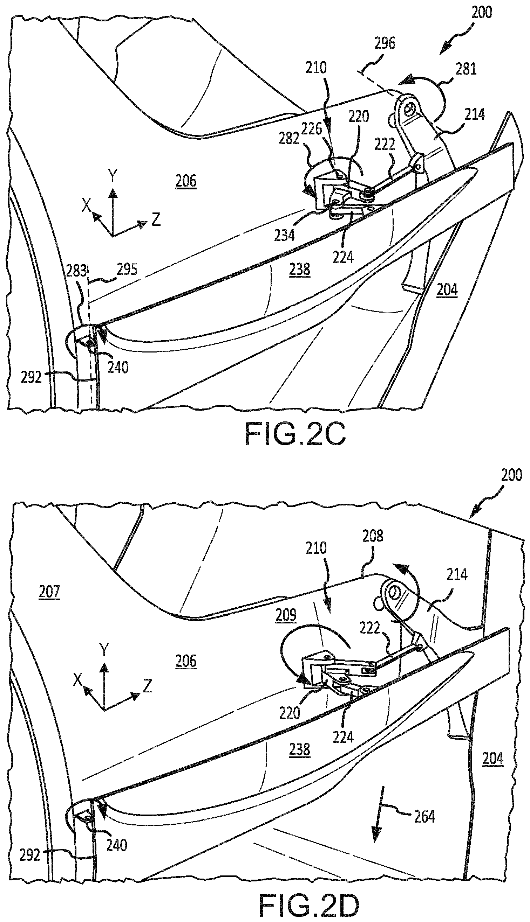

With reference to FIGs. 2A, 2B, 2C, and 2D, in response to the thrust reverser 200 assuming the closed or stowed position, e.g., during flight, the upper reverser door 202 and the lower reverser door 204 are rotated to their closed positions (*see* FIG. 2A and FIG. 2B). The outer surfaces of the upper reverser door 202, the lower reverser door 204, and deployable fairing 238 blend with the outer surface of the nacelle, forming a smooth aerodynamic shape of the gas turbine engine. In the same stowed configuration, a mixed gas stream 260 exits the exhaust duct 205 and is generally unaffected by the thrust reverser 200 or its componentry, as the inner surfaces of the upper reverser door 202 and the lower reverser door 204 are blended with the interior surface of the exhaust duct 205 to provide a generally smooth and annular exhaust flow path from downstream of the core engine exhaust to a downstream exit plane or aft end of the thrust reverser 200. While in the stowed position, the mixed gas stream 260 flows out the exhaust duct 205, providing forward thrust necessary to propel the aircraft. In response to the thrust reverser 200 assuming the open or deployed position, e.g., upon landing, the upper reverser door 202 and the lower reverser door 204 are rotated to their open positions (*see* FIG. 2D). The mixed gas stream 260 is diverted from the exit of the exhaust duct 205 to form a first stream, following an inner surface of the upper reverser door and a second stream 264, following an inner surface of the lower reverser door 204. Both the first stream and the second stream 264 have forward vector components of thrust, which provide the reverse thrust acting on the aircraft.

A central axis A is illustrated extending through the thrust reverser 200. The central axis A may define a fore end or fore direction (negative Z-direction) of the thrust reverser 200 and an aft end or aft direction (positive Z-direction) of the thrust reverser 200. Various embodiments of the disclosure may be described in relation to the central axis A. For example, the upper reverser door 202 may be considered positioned above the central axis A while the lower reverser door 204 may be considered positioned below the central axis A. Similarly, the port side beam 209 may be considered positioned to the port or left side of the central axis A (looking in the fore direction (negative Z-direction)) while the starboard side beam may be considered positioned to the right or starboard side of the central axis A (looking in the fore direction). More generally, reference to a first reverser door may broadly refer to a reverser door positioned opposite a second reverser door with respect to the central axis A, there being no preferred up or down or side to side orientation, while reference to a first side beam may broadly refer to a side beam positioned opposite a second side beam with respect to the central axis A. As used herein, a first component positioned opposite a second component does not imply the second component is a mirror image of the first component or the second component is positioned symmetrically opposite to the first component, though the disclosure contemplates such mirror image and symmetric configurations and positioning.

In various embodiments, actuation arrangement 210 may include one or more components mounted to port side beam 209. Actuation arrangement 210 is configured to facilitate rotation of the deployable fairing 238 between deployed and stowed positions. Deployable fairing 238 may be pivotally coupled to frame 206. Deployable fairing 238 may be pivotally coupled to frame 206 via a hinge, such as hinge 240, located at the forward edge 292 of deployable fairing 238. In this regard, deployable fairing 238 may rotate generally about its forward edge 292. In this regard, the aft edge 294 of deployable fairing 238 may rotate outwards, away from central axis A, in response to deployable fairing 238 rotating about hinge 240. Deployable fairing 238 may be configured to rotate about hinge 240 to a deployed position (see FIG. 2D, also referred to herein as a first position) in response to lower reverser door 204 rotating with respect to frame 206 in a first rotational direction (e.g., see arrow 281 of FIG. 2C). Deployable fairing 238 may be configured to rotate about hinge 240 to a stowed position (see FIG. 2B, also referred to herein as a second position) in response to lower reverser door 204 rotating with respect to frame 206 in a second rotational direction (e.g., opposite rotational direction of arrow 281 of FIG. 2C).

Deployable fairing is rotated about a first axis 295 (e.g., substantially parallel the Y-axis of FIG. 2C). Lower reverser door 204 may be rotated about a second axis 296 (e.g., substantially parallel the X-axis of FIG. 2C). The first axis 295 may be substantially orthogonal to the second axis 296.

Actuation arrangement 210 comprises a bell crank 220 pivotally coupled to frame 206, a first link 222 pivotally coupled to hinge member 214, and a second link 224 pivotally coupled to deployable fairing 238. Bell crank 220 may be pivotally coupled to frame 206 via a hinge 226. Bell crank 220 may rotate about hinge 226. A first end of first link 222 is pivotally coupled to hinge member 214 and a second end of first link 222 is pivotally coupled to a first pivot point 232 of bell crank 220. A first end of second link 224 is pivotally coupled to deployable fairing 238 and a second end of second link 224 is pivotally coupled to a second pivot point 234 of bell crank 220. Although illustrated as being coupled to hinge member 214 for lower reverser door 204, first link 222 may alternatively be coupled to a hinge member for upper reverser door 202.

Bell crank 220 may be moveable between a first position (see FIG. 2B) corresponding to a stowed position of the deployable fairing 238, and a second position (see FIG. 2D) corresponding to a deployed position of deployable fairing 238. With additional reference to FIG. 2C and FIG. 2D, and in response to lower reverser door 204 rotating towards an open position (see arrow 281), hinge member 214 may rotate with respect to frame 206, thereby urging bell crank 220 to rotate (see arrow 282) with respect to frame 206 via first link 222. As bell crank 220 rotates, second pivot point 234 moves outward (negative X-direction), away from frame 206, pushes on link 224, thereby urging deployable fairing 238 to rotate about hinge 240 (see arrow 283) and out of the way of lower reverser door 204. In this manner, the deployable fairing 238 is rotated to a deployed position in response to lower reverser door 204 moving to an open position. Conversely, the deployable fairing 238 is rotated to a stowed position in response to lower reverser door 204 moving to a closed position. In this regard, deployable fairing 238 may move between the stowed and deployed positions, dependent on the rotational position of lower reverser door 204.

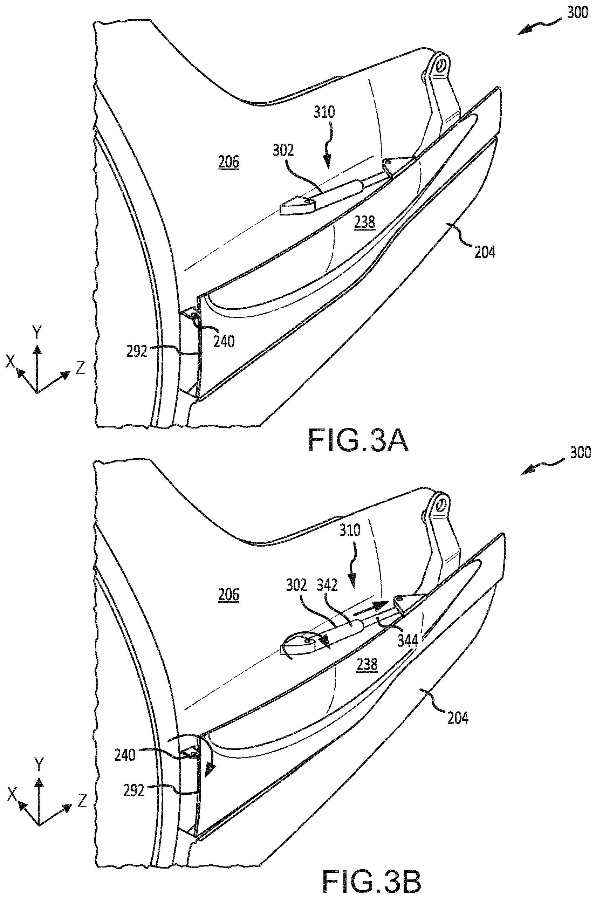

With respect to FIG. 3A and FIG. 3B, elements with like element numbering, as depicted in FIGs. 2A through FIG. 2D, are intended to be the same and will not necessarily be repeated for the sake of clarity.

With combined reference to FIG. 3A and FIG. 3B, a deployable fairing 238 is illustrated in a stowed position and a deployed position, respectively, in accordance with an embodiment not part of the claimed invention. . Deployable fairing 238 may be moved between the stowed position and the deployed position via an actuation arrangement 310. Actuation arrangement 310 may include a linear actuator 302. Linear actuator 302 may be pivotally coupled to deployable fairing 238. Linear actuator 302 may be pivotally coupled to frame 206. Linear actuator 302 may comprise any suitable actuator for imparting rotational motion to deployable fairing 238, including a mechanical actuator, an electromechanical actuator, a pneumatic actuator, a hydraulic actuator, among others. Linear actuator 302 may comprise a moveable member 344 (e.g., a piston or a plunger) which may extend from an actuator housing 342 to rotate deployable fairing 238 about hinge 240 in a first rotational direction. Conversely, moveable member 344 may retract or compress into actuator housing 342 to rotate deployable fairing 238 about hinge 240 in a second rotational direction. In this regard, deployable fairing 238 may move between stowed and deployed positions in response to linear actuator 302 extending and/or retracting. In this regard, deployable fairing 238 may move between the stowed and deployed positions, independent from the rotational position of lower reverser door 204.

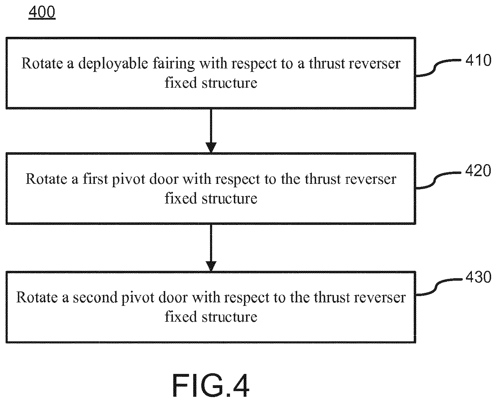

With reference to FIG. 4, a method 400 for deploying a thrust reverser is illustrated, in accordance with claim 10. . Method 400 includes rotating a deployable fairing with respect to a thrust reverser fixed structure (step 410). Method 400 includes rotating a first pivot door with respect to the thrust reverser fixed structure (step 420). Method 400 may include rotating a second pivot door with respect to the thrust reverser fixed structure (step 430).

With combined reference to FIGs. 2A through FIG. 4, step 410 includes rotating deployable fairing 238 with respect to frame 206. In various embodiments, step 410 includes rotating deployable fairing 238 with respect to frame 206 via actuation arrangement 210 in response to lower reverser door 204 rotating with respect to frame 206 via hinge member 214. In various embodiments, step 410 includes rotating deployable fairing 238 with respect to frame 206 via actuation arrangement 310. Step 420 may include rotating lower reverser door 204 with respect to frame 206. Step 430 may include rotating upper reverser door 202 with respect to frame 206. In various embodiments, step 410, step 420, and step 430 occur simultaneously, for example when implementing actuation arrangement 210. In various embodiments, step 410 occurs before step 420 and step 430, for example when implementing actuation arrangement 310. Upper reverser door 202 and lower reverser door 204 may be rotated with respect to frame 206 via known actuation systems.

The description is not intended to be exhaustive or to limit the principles described or illustrated herein to any precise form. The invention is defined in the appended claims.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An actuation arrangement (210; 310) for a thrust reverser (130; 200), comprising:
a bell crank (220) configured to be pivotally coupled to a frame (206) of the thrust reverser (130; 200);
a first link (222); and
a second link (224),
wherein the bell crank (220) is configured to move a deployable fairing (138; 238) between a first position and a second position in response to a reverser door (134; 136; 202; 204) rotating with respect to the frame (206), **characterized in that**:
a first end of the first link (222) is configured to be pivotally coupled to a first pivot point (232) of the bell crank (220) and a second end of the first link (222) is configured to be pivotally coupled to a hinge member (214), wherein the reverser door (134; 136; 202; 204) is pivotally coupled to the frame (206) via the hinge member (214); and
a first end of the second link (224) is configured to be pivotally coupled to a second pivot point (234) of the bell crank (220) and a second end of the second link (224) is configured to be pivotally coupled to the deployable fairing (238).

2. The actuation arrangement of claim 1, further comprising a hinge (226), the bell crank (220) configured to rotate about the hinge (226).

3. The actuation arrangement of claim 2, wherein the bell crank (220) is configured to be pivotally coupled to the frame (206) via the hinge (226).

4. The actuation arrangement of any preceding claim, wherein the bell crank (220) is driven by the hinge member (214).

5. A thrust reverser (130; 200), comprising;
a frame (206);
a reverser door (134; 136; 202; 204) pivotally coupled to the frame (206); and
a deployable fairing (138; 238) pivotally coupled to the frame (206), wherein the deployable fairing (138; 238) is configured to move away from a central axis (A) of the thrust reverser (130; 200) to provide clearance for the reverser door (134; 136; 202; 204) to rotate into a deployed position,
wherein the deployable fairing (138; 238) is pivotally coupled to the frame (206) via the actuation arrangement (210; 310) of any preceding claim.

6. The thrust reverser of claim 5, wherein the deployable fairing (138; 238) is configured to move with respect to the frame (206) to a first position in response to the reverser door (134; 136; 202; 204) rotating about the frame (206) in a first rotational direction, and the deployable fairing (138; 238) is configured to move with respect to the frame (206) to a second position in response to the reverser door (134; 136; 202; 204) rotating about the frame (206) in a second rotational direction.

7. The thrust reverser of claim 5 or 6 or actuation arrangement of any preceding claim, wherein the bell crank (220) is configured to move the deployable fairing (138; 238) between the first position and the second position, via the second link (224), in response to the bell crank (220) being rotated via the first link (222).

8. The thrust reverser of any of claims 5 to 7, wherein the actuation arrangement (310) further comprises a linear actuator (302), a first end of the linear actuator (302) is pivotally coupled to the frame (206) and a second end of the linear actuator (302) is pivotally coupled to the deployable fairing (138; 238), wherein the deployable fairing (138; 238) is moveable between a or the first position and a or the second position in response to the linear actuator (302) at least one of extending or retracting.

9. The thrust reverser of any of claims 5 to 8, wherein a forward end of the deployable fairing (138; 238) is pivotally coupled to the frame (206).

10. A method for deploying the thrust reverser of any of claims 5 to 9, comprising:
rotating the deployable fairing (138; 238) with respect to the frame (206); and
rotating the first reverser door (134; 202) with respect to the frame (206).

11. The method of claim 10, further comprising rotating a second reverser door (136; 204) with respect to the frame (206).

## Patentansprüche

1. Betätigungsanordnung (210; 310) für eine Schubumkehreinrichtung (130; 200), umfassend:
einen Winkelhebel (220), der so konfiguriert ist, dass er gelenkig an einen Rahmen (206) der Schubumkehreinrichtung (130; 200) gekoppelt ist;
ein erstes Verbindungsstück (222); und
ein zweites Verbindungsstück (224),
wobei der Winkelhebel (220) so konfiguriert ist, dass er eine ausfahrbare Verkleidung (138; 238) zwischen einer ersten Position und einer zweiten Position als Reaktion darauf, dass sich eine Schubumkehreinrichtungsklappe (134; 136; 202; 204) in Bezug auf den Rahmen (206) dreht, bewegt, **dadurch gekennzeichnet, dass**:
ein erstes Ende des ersten Verbindungsstücks (222) so konfiguriert ist, dass es gelenkig mit einem ersten Drehpunkt (232) des Winkelhebels (220) gekoppelt ist, und ein zweites Ende des ersten Verbindungsstücks (222) so konfiguriert ist, dass es gelenkig an einen Scharnierelement (214) gekoppelt ist, wobei die Schubumkehreinrichtungsklappe (134; 136; 202; 204) gelenkig mit dem Rahmen (206) über das Scharnierelement (214) gekoppelt ist; und
ein erstes Ende des zweiten Verbindungsstücks (224) so konfiguriert ist, dass es gelenkig mit einem zweiten Drehpunkt (234) des Winkelhebels (220) gekoppelt ist, und ein zweites Ende des zweiten Verbindungsstücks (224) so konfiguriert ist, dass es gelenkig mit der ausfahrbaren Verkleidung (238) gekoppelt ist.

2. Betätigungsanordnung nach Anspruch 1, ferner ein Scharnier (226) umfassend, wobei der Winkelhebel (220) so konfiguriert ist, dass er sich um das Scharnier (226) dreht.

3. Betätigungsanordnung nach Anspruch 2, wobei der Winkelhebel (220) so konfiguriert ist, dass er gelenkig mit dem Rahmen (206) über das Scharnier (226) gekoppelt ist.

4. Betätigungsanordnung nach einem der vorstehenden Ansprüche, wobei der Winkelhebel (220) von dem Scharnierelement (214) angetrieben wird.

5. Schubumkehreinrichtung (130; 200), umfassend;
einen Rahmen (206);
eine Schubumkehreinrichtungsklappe (134; 136; 202; 204), die gelenkig an dem Rahmen (206) gekoppelt ist; und
eine ausfahrbare Verkleidung (138; 238), die gelenkig an dem Rahmen (206) gekoppelt ist, wobei die ausfahrbare Verkleidung (138; 238) so konfiguriert ist, dass sie sich von einer Mittelachse (A) der Schubumkehreinrichtung (130; 200) weg bewegt, um einen Freiraum bereitzustellen, damit sich die Schubumkehreinrichtungsklappe (134; 136; 202; 204) in eine ausgefahrene Position drehen kann,
wobei die ausfahrbare Verkleidung (138; 238) gelenkig an dem Rahmen (206) über die Betätigungsanordnung (210; 310) nach einem der vorstehenden Ansprüche gekoppelt ist.

6. Schubumkehreinrichtung nach Anspruch 5, wobei die ausfahrbare Verkleidung (138; 238) so konfiguriert ist, dass sie sich in Bezug auf den Rahmen (206) auf eine erste Position als Reaktion darauf, dass sich die Schubumkehreinrichtungsklappe (134; 136; 202; 204) um den Rahmen (206) in einer ersten Drehrichtung dreht, bewegt, und wobei die ausfahrbare Verkleidung (138; 238) so konfiguriert ist, dass sie sich in Bezug auf den Rahmen (206) auf eine zweite Position als Reaktion darauf, dass sich die Schubumkehreinrichtungsklappe (134; 136; 202; 204) um den Rahmen (206) in einer zweiten Drehrichtung dreht, bewegt.

7. Schubumkehreinrichtung nach Anspruch 5 oder 6 oder Betätigungsanordnung nach einem der vorstehenden Ansprüche, wobei der Winkelhebel (220) so konfiguriert ist, dass er die ausfahrbare Verkleidung (138; 238) zwischen der ersten Position und der zweiten Position, mittels des zweiten Verbindungsstücks (224), als Reaktion darauf, dass der Winkelhebel (220) mittels des ersten Verbindungsstücks (222) gedreht wird, bewegt.

8. Schubumkehreinrichtung nach einem der Ansprüche 5 bis 7, wobei die Betätigungsanordnung (310) ferner einen linearen Aktuator (302) umfasst, wobei ein erstes Ende des linearen Aktuators (302) gelenkig mit dem Rahmen (206) gekoppelt ist und ein zweites Ende des linearen Aktuators (302) gelenkig mit der ausfahrbaren Verkleidung (138; 238) gekoppelt ist, wobei die ausfahrbare Verkleidung (138; 238) zwischen einer oder der ersten Position und einer oder der zweiten Position als Reaktion darauf, dass sich der lineare Aktuator (302) mindestens eins aus ausfährt oder einfährt, beweglich ist.

9. Schubumkehreinrichtung nach einem der Ansprüche 5 bis 8, wobei ein vorderes Ende der ausfahrbaren Verkleidung (138; 238) gelenkig mit dem Rahmen (206) gekoppelt ist.

10. Verfahren zum Ausfahren der Schubumkehreinrichtung nach einem der Ansprüche 5 bis 9, umfassend:
Drehen der ausfahrbaren Verkleidung (138; 238) in Bezug auf den Rahmen (206); und
Drehen der ersten Schubumkehreinrichtungsklappe (134; 202) in Bezug auf den Rahmen (206).

11. Verfahren nach Anspruch 10, ferner das Drehen der zweiten Schubumkehreinrichtungsklappe (136; 204) in Bezug auf den Rahmen (206) umfassend.

## Revendications

1. Agencement d'actionnement (210 ; 310) pour un inverseur de poussée (130 ; 200), comprenant :
un levier coudé (220) configuré pour être couplé de manière pivotante à un châssis (206) de l'inverseur de poussée (130 ; 200) ;
une première liaison (222) ; et
un seconde liaison (224),
dans lequel le levier coudé (220) est configuré pour déplacer un carénage déployable (138 ; 238) entre une première position et une seconde position en réponse à une porte d'inverseur (134 ; 136 ; 202 ; 204) tournant par rapport au châssis (206), **caractérisé en ce que** :
une première extrémité de la première liaison (222) est configurée pour être couplée de manière pivotante à un premier point de pivotement (232) du levier coudé (220) et une seconde extrémité de la seconde liaison (222) est configurée pour être couplée de manière pivotante à un élément de charnière (214), dans lequel la porte d'inverseur (134 ; 136 ; 202 ; 204) est couplée de manière pivotante au châssis (206) via l'élément de charnière (214) ; et
une première extrémité de la seconde liaison (224) est configurée pour être couplée de manière pivotante à un second point de pivotement (234) du levier coudé (220) et une seconde extrémité de la seconde liaison (224) est configurée pour être couplée de manière pivotante au carénage déployable (238).

2. Agencement d'actionnement selon la revendication 1, comprenant en outre une charnière (226), le levier coudé (220) étant configuré pour tourner autour de la charnière (226).

3. Agencement d'actionnement selon la revendication 2, dans lequel le levier coudé (220) est configuré pour être couplé de manière pivotante au châssis (206) via la charnière (226).

4. Agencement d'actionnement selon une quelconque revendication précédente, dans lequel le levier coudé (220) est entraîné par l'élément de charnière (214).

5. Inverseur de poussée (130 ; 200), comprenant :
un châssis (206) ;
une porte d'inverseur (134 ; 136 ; 202 ; 204) couplée de manière pivotante au châssis (206) ; et
un carénage déployable (138 ; 238) couplé de manière pivotante au châssis (206), dans lequel le carénage déployable (138 ; 238) est configuré pour s'éloigner d'un axe central (A) de l'inverseur de poussée (130 ; 200) pour fournir un jeu pour que la porte d'inverseur (134 ; 136 ; 202 ; 204) tourne dans une position déployée,
dans lequel le carénage déployable (138 ; 238) est couplé de manière pivotante au châssis (206) via l'agencement d'actionnement (210 ; 310) selon une quelconque revendication précédente.

6. Inverseur de poussée selon la revendication 5, dans lequel le carénage déployable (138 ; 238) est configuré pour se déplacer par rapport au châssis (206) vers une première position en réponse à la porte d'inverseur (134 ; 136 ; 202 ; 204) tournant autour du châssis (206) dans un premier sens de rotation, et le carénage déployable (138 ; 238) est configuré pour se déplacer par rapport au châssis (206) vers une seconde position en réponse à la porte d'inverseur (134 ; 136 ; 202 ; 204) tournant autour du châssis (206) dans un second sens de rotation.

7. Inverseur de poussée selon la revendication 5 ou 6 ou agencement d'actionnement selon une quelconque revendication précédente, dans lequel le levier coudé (220) est configuré pour déplacer le carénage déployable (138 ; 238) entre la première position et la seconde position, via la seconde liaison (224), en réponse à la rotation du levier coudé (220) via la première liaison (222).

8. Inverseur de poussée selon l'une quelconque des revendications 5 à 7, dans lequel l'agencement d'actionnement (310) comprend en outre un actionneur linéaire (302), une première extrémité de l'actionneur linéaire (302) est couplée de manière pivotante au châssis (206) et une seconde extrémité de l'actionneur linéaire (302) est couplée de manière pivotante au carénage déployable (138 ; 238), dans lequel le carénage déployable (138 ; 238) est mobile entre une ou la première position et une ou la seconde position en réponse à l'extension et/ou à la rétraction de l'actionneur linéaire (302).

9. Inverseur de poussée selon l'une quelconque des revendications 5 à 8, dans lequel une extrémité avant du carénage déployable (138 ; 238) est couplée de manière pivotante au châssis (206).

10. Procédé de déploiement de l'inverseur de poussée selon l'une quelconque des revendications 5 à 9, comprenant :
la rotation du carénage déployable (138 ; 238) par rapport au châssis (206) ; et
la rotation de la première porte d'inverseur (134 ; 202) par rapport au châssis (206).

11. Procédé selon la revendication 10, comprenant en outre la rotation d'une seconde porte d'inverseur (136 ; 204) par rapport au châssis (206).
